(19)

Europäisches
Patentamt
European
Patent Office
Office européen
des brevets

(11) **EP 4 064 239 A2**

(12) **EUROPEAN PATENT APPLICATION**

(43) Date of publication:
**28.09.2022 Bulletin 2022/39**

(51) International Patent Classification (IPC):
**G08G 1/00** *(2006.01)*

(21) Application number: **22181839.6**

(22) Date of filing: **29.06.2022**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.06.2021 CN 202110746648**

(71) Applicant: **Apollo Intelligent Connectivity (Beijing)
Technology Co., Ltd.
Beijing 100176 (CN)**

(72) Inventor: **Shen, Donghui
Beijing, 100176 (CN)**

(74) Representative: **Hoffmann Eitle
Patent- und Rechtsanwälte PartmbB
Arabellastraße 30
81925 München (DE)**

(54) **METHOD AND APPARATUS OF DETERMINING STATE OF INTERSECTION, STORAGE MEDIUM, AND PROGRAM PRODUCT**

(57)    A method and an apparatus of determining a state of an intersection, a storage medium, and a program product are provided, which relate to a field of artificial intelligence technology, and in particular to fields of intelligent transportation technology and computer vision technology. The intersection is formed by a convergence of a plurality of road segments including at least two driving-in road segments, and each driving-in road segment includes at least one sub road segment. The method includes: determining attribute data and traffic data of each sub road segment of each driving-in road segment; determining a traffic condition information of each driving-in road segment based on the attribute data and the traffic data; and determining the state of the intersection based on the traffic condition information of the at least two driving-in road segments.

<u>200</u>

FIG. 2

**Description**

TECHNICAL FIELD

The present disclosure relates to a field of artificial intelligence technology, in particular to a field of intelligent transportation technology and a field of computer vision technology, and more particularly, to a method and an apparatus of determining a state of an intersection, a storage medium, and a program product.

BACKGROUND

With a development of electronic technology, all walks of life tend to use an artificial intelligence technology for data processing, so as to achieve uninterrupted management of various scenarios.
In an intelligent traffic scenario, in order to reasonably carry out road planning and traffic signal control, it is usually necessary to acquire states of an intersection formed by roads within various time periods. For example, a video signal acquired for each intersection may be decoded, and a state of the intersection may be determined according to a processing result.

SUMMARY

A method and an apparatus of determining a state of an intersection with improved accuracy, a storage medium, and a program product are provided.
According to an aspect of the present disclosure, a method of determining a state of an intersection is provided, wherein the intersection is formed by a convergence of a plurality of road segments including at least two driving-in road segments, and each driving-in road segment of the at least two driving-in road segments includes at least one sub road segment, and the method includes: determining attribute data and traffic data of each sub road segment of each driving-in road segment; determining a traffic condition information of each driving-in road segment based on the attribute data and the traffic data; and determining the state of the intersection based on the traffic condition information of the at least two driving-in road segments.
According to another aspect of the present disclosure, an apparatus of determining a state of an intersection is provided, wherein the intersection is formed by a convergence of a plurality of road segments including at least two driving-in road segments, and each driving-in road segment of the at least two driving-in road segments includes at least one sub road segment, and the apparatus includes: a sub road segment data determination module, configured to determine attribute data and traffic data of each sub road segment of each driving-in road segment; a traffic condition information determination module, configured to determine a traffic condition information of each driving-in road segment based on the attribute data and the traffic data; and a state determination module, configured to determine the state of the intersection based on the traffic condition information of the at least two driving-in road segments.
According to yet another aspect of the present disclosure, an electronic device is provided, including: at least one processor; and a memory communicatively connected to the at least one processor, wherein the memory stores instructions executable by the at least one processor, and the instructions, when executed by the at least one processor, cause the at least one processor to implement the method of determining a state of an intersection provided by the present disclosure.
According to yet another aspect of the present disclosure, a non-transitory computer-readable storage medium having computer instructions stored thereon is provided, wherein the computer instructions are configured to cause a computer to implement the method of determining a state of an intersection provided by the present disclosure.
According to yet another aspect of the present disclosure, a computer program product including a computer program is provided, wherein the computer program, when executed by a processor, causes the processor to implement the method of determining a state of an intersection provided by the present disclosure.
It should be understood that content described in this section is not intended to identify key or important features in the embodiments of the present disclosure, nor is it intended to limit the scope of the present disclosure. Other features of the present disclosure will be easily understood through the following description.

BRIEF DESCRIPTION OF THE DRAWINGS

The accompanying drawings are used to better understand the solution and do not constitute a limitation to the present disclosure, wherein:

FIG. 1 shows a schematic diagram of an application scenario of a method and an apparatus of determining a state of an intersection according to an embodiment of the present disclosure;

FIG. 2 shows a schematic flowchart of a method of determining a state of an intersection according to an embodiment of the present disclosure;

FIG. 3 shows a schematic diagram of a principle of determining a weighted congestion index according to an embodiment of the present disclosure;

FIG. 4 shows a schematic diagram of a principle of determining a state of each driving-in road segment according to an embodiment of the present disclosure;

FIG. 5 shows a schematic diagram of a principle of determining a continuous congestion length and a non-congestion length according to an embodiment of the present disclosure;

FIG. 6 shows a structural block diagram of an apparatus of determining a state of an intersection according to an embodiment of the present disclosure; and

FIG. 7 shows a block diagram of an electronic device for implementing a method of determining a state of an intersection according to an embodiment of the present disclosure.

DETAILED DESCRIPTION OF EMBODIMENTS

The exemplary embodiments of the present disclosure are described below with reference to the accompanying drawings, which include various details of the embodiments of the present disclosure to facilitate understanding, and which should be considered as merely illustrative. Therefore, those of ordinary skilled in the art should realize that various changes and modifications may be made to the embodiments described herein without departing from the scope and spirit of the present disclosure. In addition, for clarity and conciseness, descriptions of well-known functions and structures are omitted in the following description.

The present disclosure provides a method of determining a state of an intersection, wherein the intersection is formed by a convergence of a plurality of road segments including at least two driving-in road segments, and each driving-in road segment of the at least two driving-in road segments includes at least one sub road segment, and the method includes a data determination stage, a traffic condition information determination stage, and a state determination stage. In the data determination stage, attribute data and traffic data of each sub road segment of each driving-in road segment are determined. In the traffic condition information determination stage, a traffic condition information of each driving-in road segment is determined based on the attribute data and the traffic data. In the state determination stage, the state of the intersection is determined based on the traffic condition information of the at least two driving-in road segments.

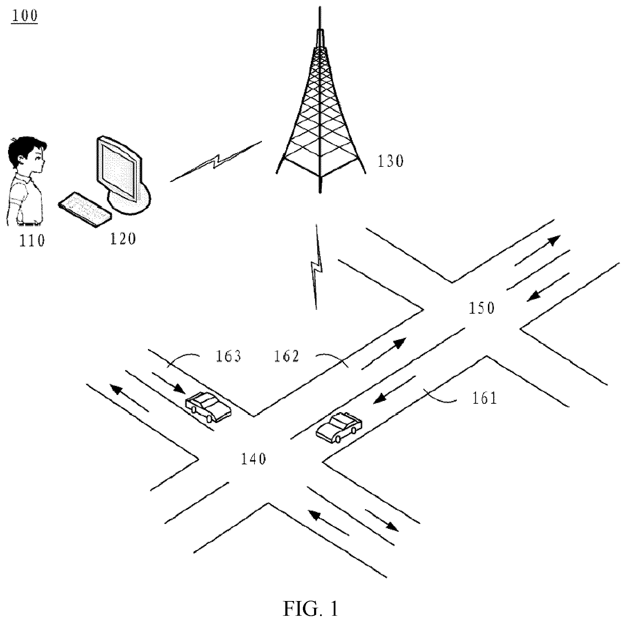

An application scenario of the method and the apparatus provided by the present disclosure will be described below with reference to FIG. 1.

FIG. 1 shows a schematic diagram of an application scenario of a method and an apparatus of determining a state of an intersection according to an embodiment of the present disclosure.

As shown in FIG. 1, a scenario 100 in the embodiment includes a monitor 110, a terminal 120, a communication base station 130, and a road traffic network. The road traffic network may include roads and an intersection formed by a convergence of the roads. For example, in the scenario 100, the road traffic network includes at least intersection 140 and intersection 150. The intersection 140 is formed by a convergence of a road segment 161, a road segment 162, and a road segment 163 in the road traffic network.

The road segment in the embodiments of the present disclosure refers to a road segment, between two adjacent intersections, of a road. Road segments that converge to form an intersection may include a road segment for driving into the intersection and a road segment for driving out of the intersection. For example, road segments that converge to form the intersection 140 include the road segments 161, 163, etc. for driving into the intersection 140 and the road segment 162, etc. for driving out of the intersection 140.

In an example, as shown in FIG. 1, a vehicle may be driven on a road segment used to form an intersection. The vehicle may be integrated with a navigation system; or a handheld terminal of a driver in the vehicle is installed with a navigation application. The navigation system or navigation application may upload real-time data to a background server through the communication base station 130. The terminal 120 may, for example, request data from the background server through a network to acquire the data uploaded by the navigation system or navigation application, and analyze a traffic condition of each road segment used to form the intersection according to the data to determine the state of the intersection based on the traffic condition of each road segment. The monitor 110 may, for example, adjust a signal period and a green signal ratio of a traffic signal indicator light provided at the intersection according to a relationship between the state of the intersection and time, or may determine a reconstruction design scheme for the road according to the state.

In an example, the terminal 120 may be, for example, a server, a desktop computer, a laptop computer, or the like, which has a monitoring function and an information display function, and various client applications may be installed on the terminal 120. The background server may be, for example, any server that supports an operation of the navigation system or the navigation application, such as a server of a distributed system, or a server combined with a blockchain.

It should be noted that, the method of determining a state of an intersection provided by the embodiment of the present disclosure may generally be performed by the terminal 120. The apparatus of determining the state of the intersection provided by the embodiments of the present disclosure may be provided in the terminal 120.

It should be understood that the numbers and types of the terminal, the roads, the vehicles, and the communication base station shown in FIG. 1 are merely illustrative. According to implementation needs, there may be any number and any type of terminal, road, vehicle and communication base station.

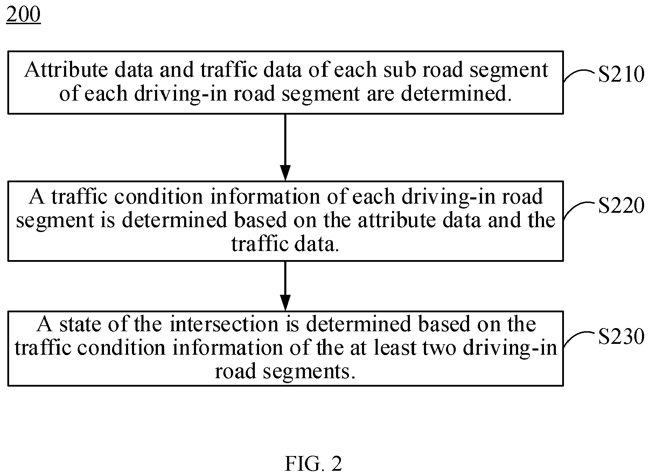

The method of determining a state of an intersection provided by the present disclosure will be described in detail below with reference to FIGS. 2 to 5, in combination with FIG. 1.

FIG. 2 shows a flowchart of a method of determining a state of an intersection according to an embodiment of the present disclosure.

As shown in FIG. 2, the method 200 of determining a state of an intersection in the embodiment may include operations S210 to S230. The intersection is formed by a convergence of a plurality of road segments including at least two driving-in road segments, and each driving-in road segment includes at least one sub road segment.

According to an embodiment of the present disclosure, each road segment may be divided into at least one sub road segment based on a predetermined length, and the sub road segment may be equivalent to an arc Link used for storing navigation path data. The predetermined length may be set according to an actual desire, for example, the predetermined length may be set to 50 m, 100 m, etc., which is not limited in the present disclosure.

In operation S210, attribute data and traffic data of each sub road segment of each driving-in road segment are determined.

According to an embodiment of the present disclosure, the traffic data of each sub road segment of the driving-in road segment may be obtained by analyzing video data acquired by various monitoring devices on the road in real time. The traffic data may include, for example, the number of vehicles on the sub road segment, a position of a vehicle on the sub road segment, a driving speed of a vehicle on the sub road segment, and a driving duration consumed by a vehicle passing through the sub road segment, and other information. A road network information may be acquired from a server which provides a service support to a map navigation client application. The road network information includes the attribute data of each sub road segment. The attribute data may include, for example, a length of the sub road segment, a start position and an end position of the sub road segment, etc.

According to an embodiment of the present disclosure, a vehicle position information uploaded by a navigation application and a road network information may also be acquired, and the traffic data of each sub road segment of the driving-in road segment is determined based on the road network information and the vehicle position information. Specifically, the attribute data of the sub road segment may be located from the road network information. Then, according to the vehicle position information, data such as the number of the vehicles on the sub road segment and the positions of the vehicles on the sub road segment are determined as the traffic data. Different from the technical solution of analyzing the acquired video data to determine the traffic data, the cost of determining a state of an intersection in this embodiment may be reduced, and the execution stability of the method of determining a state of an intersection may be improved.

According to an embodiment of the present disclosure, the traffic data may further include a congestion index determined based on the number of the vehicles and the positions of the vehicles. A value range of the congestion index may depend on a setting rule of the navigation application. For example, the value range of the congestion index may be [0, 100]. In practice, 90% of the values of the congestion indexes of the sub road segments are less than or equal to 5, and the value of the congestion index may be greater than 10 only in a case of severe congestion.

In operation S220, a traffic condition information of each driving-in road segment is determined based on the attribute data and the traffic data.

According to an embodiment of the present disclosure, a traffic condition information of each sub road segment may be determined according to the attribute data and the traffic data of each sub road segment of the driving-in road segment. An average value of traffic condition information of the sub road segments is determined as the traffic condition information of the driving-in road segment. For example, an average speed of vehicles driving on each sub road segment may be determined, and an average value of average speeds of vehicles driving on at least one sub road segment of the driving-in road segment may be used as the traffic condition information of the driving-in road segment. Alternatively, the traffic data may include the congestion index, and in this embodiment, a weighted sum of congestion indexes of at least one sub road segment may be calculated by using a ratio of a length of the sub road segment to a length of the driving-in road segment as a weight. The obtained weighted sum is used as the congestion index of the driving-in road segment, and as the traffic condition information.

According to an embodiment of the present disclosure, a congestion parameter of each driving-in road segment may be determined based on the attribute data and the traffic data. Then, according to the congestion parameter and a predetermined threshold associated with the congestion parameter, a state of each driving-in road segment is determined, and the determined state is used as a traffic condition information. For example, a congestion length of each driving-in road segment may be determined according to the attribute data and the traffic data of each sub road segment of the driving-in road segment. According to a magnitude relationship between the congestion length and a congestion length threshold, the state of the driving-in road segment is determined. The state may include, for example, a congestion state, an idle state, a saturation state, etc. For example, the congestion parameter may further include parameters, such as the above-mentioned congestion index, average speed, and average driving duration, that may reflect whether the road segment is congested or not, which is not limited in the present disclosure.

In operation S230, the state of the intersection is determined based on the traffic condition information of the at least two driving-in road segments.

According to an embodiment of the present disclosure, it may be determined whether a congestion situation exists at the intersection or not based on the traffic condition information of the at least two driving-in road segments, and if so, it is determined that the state of the intersection includes the congestion state. Alternatively, it is determined whether a traffic imbalance situation exists at the intersection based on the traffic condition information of the at least two driving-in road segments, and if so, it is determined that the state of the intersection includes an imbalance state. The traffic imbalance state refers to a situation in which some of the road segments are congested whereas some of the road segments are not congested.

In the embodiments of the present disclosure, the traffic condition information of the driving-in road segment is determined by dividing the driving-in road segment used to form the intersection into at least one sub road segment and analyzing the traffic data and the attribute data of each sub road segment, which may improve the accuracy of the determined traffic condition information. On this basis, the accuracy of the determined state of the intersection may be improved, and thus the effectiveness of a subsequent traffic control may be facilitated, which may improve users' experience.

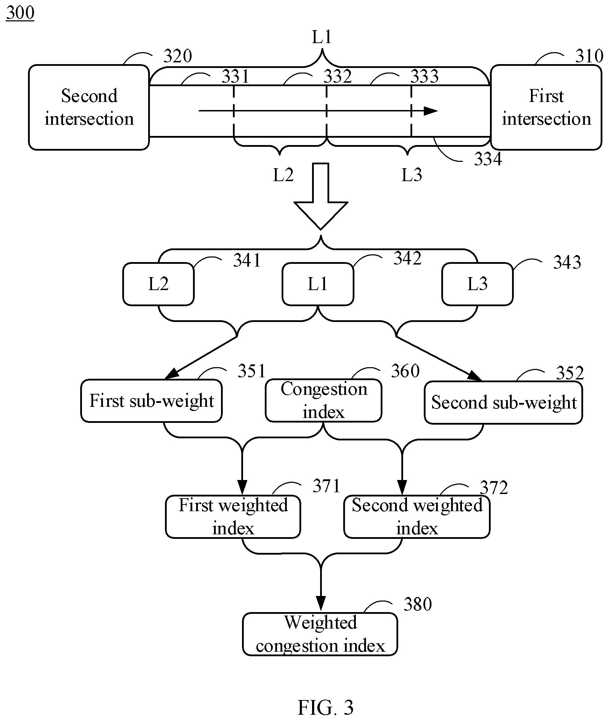

FIG. 3 is a schematic diagram of a principle of determining a weighted congestion index according to an embodiment of the present disclosure.

According to an embodiment of the present disclosure, the above-mentioned congestion parameter of the driving-in road segment may include, for example, a weighted congestion index obtained by calculating a weighted sum of the congestion indexes of the at least one sub road segment of the driving-in road segment. In this way, the accuracy of the determined congestion index of the driving-in road segment may be improved, which is conducive to an improvement on the accuracy of the determined state of the intersection.

According to an embodiment of the present disclosure, when calculating the weighted sum, a weight of the congestion index of each sub road segment may be determined based on the attribute data of the sub road segment. For example, in the operation of determining the weighted congestion index, a congestion weight of each sub road segment of the driving-in road segment with respect to the driving-in road segment may be determined based on the attribute data of the each sub road segment. Then, the weighted congestion index is determined based on the congestion weight and the congestion index of each sub road segment. That is, the congestion weight of each sub road segment with respect to the driving-in road segment is taken as a weight of the congestion index of the each sub road segment when calculating the weighted sum, so that the weighted congestion index is obtained by weighting. The congestion weight may be determined according to a length in the attribute data, because the greater the length of the sub road segment, the greater the impact of the congestion index of the sub road segment on the traffic condition of the whole driving-in road segment. Alternatively, the congestion weight may be determined according to a distance, in the attribute data, between the sub road segment and the intersection, because the closer the sub road segment is to the intersection, the more the congestion index is affected by a signal period of a traffic signal indicator light at the intersection. It may be understood that the above method of determining the congestion weight is only an example for facilitating the understanding of the present disclosure, and the congestion weight may also be determined according to any data in the attribute data in the present disclosure, which is not limited in the present disclosure.

In an example, when determining the congestion weight, both a length of the sub road segment and a position of the sub road segment may be considered, so that the determined weighted congestion index may reflect the congestion situation of the road segment accurately. For example, a first sub-weight of each sub road segment with respect to the driving-in road segment may be determined based on the length of the each sub road segment. A second sub-weight of each sub road segment with respect to the driving-in road segment is determined based on the position of the each sub road segment. An average value of the first sub-weight and the second sub-weight is determined as the congestion weight. Alternatively, a weighted sum of the first sub-weight and the second sub-weight may be calculated based on a preset weight, so as to obtain the congestion weight. Alternatively, the congestion weight includes the first sub-weight and the second sub-weight.

For example, as shown in FIG. 3, when determining the second sub-weight based on the position of each sub road segment, the embodiment 300 may be implemented to determine a distance between the position of the sub road segment and the position of the intersection, and determine the second sub-weight according to the distance. For example, for the first intersection 310, the driving-in road segment includes a road segment between the first intersection 310 and the second intersection 320, and the road segment has a length of L1. The road segment includes a sub road segment 331, a sub road segment 332, a sub road segment 333 and a sub road segment 334. The sub road segment 332 has a length of L2, and a distance between the position of the sub road segment 332 and the position of the first intersection 310 is L3. When determining the congestion weight of the sub road segment 332 with respect to the road segment, a length L2 341, a length L1 342 and a length L3 343 are required. For example, a ratio of L2 to L1 may be used as the first sub-weight 351, and a ratio of L3 to L1 may be used as the second sub-weight 352. Accordingly, the congestion weight of the sub road segment 332 with respect to the road segment including the sub-road segment 332 includes the first sub-weight 351 and the second sub-weight 352.

According to the embodiments of the present disclosure, when determining the weighted congestion index, a first weighted index 371 may be determined based on the first sub-weight 351 of the sub road segment 332 with respect to the driving-in road segment and the congestion index 360 of the sub road segment 332. Further, a second weighted index 372 may be determined based on the second sub-weight 352 of the sub road segment 332 with respect to the driving-in road segment and the congestion index 360 of the sub road segment 332. A weighted congestion index 380 is determined based on the first weighted index 371 and the second weighted index 372.

For example, a weighted sum of the congestion indexes of the sub road segments of the driving-in road segment may be determined based on the first sub-weights, so as to obtain a first weighted index. A weighted sum of the congestion indexes of the sub road segments of each driving-in road segment may be determined based on the second sub-weights, so as to obtain a second weighted index. For example, the first weighted index may be obtained by using the first sub-weights as the weights of the congestion indexes of the sub road segments. The second weighted index may be obtained by using the second sub-weights as the weights of the congestion indexes of the sub road segments.

For example, an average value of the first weighted index 371 and the second weighted index 372 may be determined as a weighted congestion index 380. Alternatively, a weighted sum of the first weighted index 371 and the second weighted index 372 may be calculated based on the preset weight, and the weighted sum may be determined as the weighted congestion index.

In an embodiment, each driving-in road segment includes n sub road segments, an $i^{th}$ sub road segment among the $n$ sub road segments has a length of $LKL$, a distance between the $i^{th}$ sub road segment and the intersection is $D$, the congestion index of the $i^{th}$ sub road segment is $LKI$, and each driving-in road segment has a total length of $LL$. Then the first sub-weight of the $i^{th}$ sub road segment with respect to the driving-in road segment may be expressed as $LKLP=LKL/LL$, and the second sub-weight of the $i^{th}$ sub road segment with respect to the driving-in road segment may be expressed as $LKPP=D/LL$. The first weighted index $LKLI_{avg}$, the second weighted index $LKPI_{avg}$ and the weighted congestion index $LKI_{avg}$ may be respectively expressed as:

$$LKLI_{avg} = \sum_{i=1}^{n} LKLP_i * LKI_i;$$

$$LKPI_{avg} = \sum_{i=1}^{n} LKPP_i * LKI_i;$$

$$LKI_{avg} = \ (LKPI_{avg} + LKLI_{avg}) \ /2.$$

According to an embodiment of the present disclosure, after the weighted congestion index is obtained, a state of the driving-in road segment may be determined according to a magnitude relationship between the weighted congestion index and a predetermined congestion index threshold. For example, a first congestion index threshold and a second congestion index threshold may be set, and the first congestion index threshold is greater than the second congestion index threshold. If a value of the weighted congestion index is greater than the first congestion index threshold, it may be determined that the state of the driving-in road segment is the congestion state. If the value of the weighted congestion index is less than or equal to the first congestion index threshold and is greater than the second congestion index threshold, it may be determined that the state of the driving-in road segment is a super-saturation state. If the value of the weighted congestion index is less than the second congestion index threshold, it may be determined that the state of the driving-in road segment is the idle state. The first congestion index threshold and the second congestion index threshold may be set according to actual desires, for example, values of the first congestion index threshold and the second congestion index threshold may be 10 and 3, respectively, which is not limited in the present disclosure.

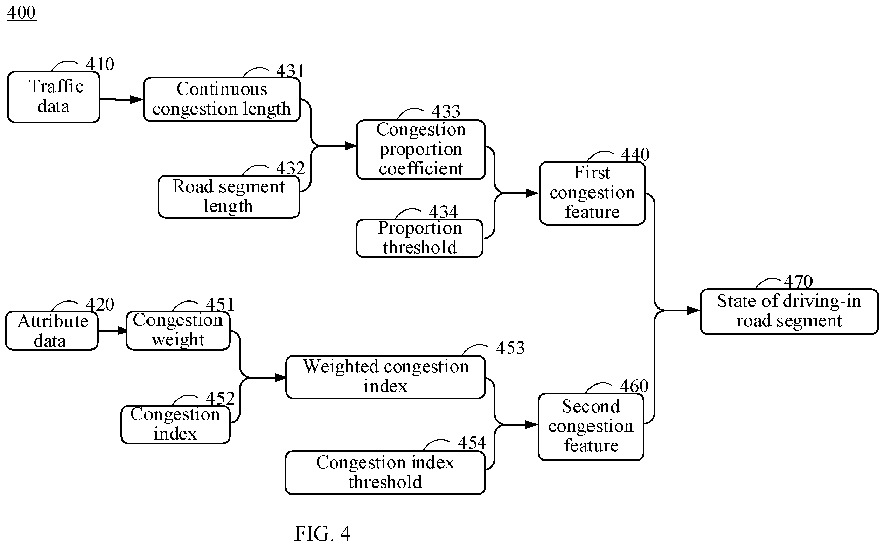

FIG. 4 shows a schematic diagram of a principle of determining a state of each driving-in road segment according to an embodiment of the present disclosure.

According to an embodiment of the present disclosure, the above-mentioned congestion parameter of the driving-in road segment may include, for example, a congestion proportion coefficient, which may be a ratio of a length of a congestion region in the driving-in road segment to the total length of the driving-in road segment. As a region where the queuing vehicles are located in the road segment is generally a congestion region, the congestion proportion coefficient may also be a ratio of a vehicle queuing length to the total length of the driving-in road segment.

In an embodiment, if a driving-in road segment is very long, a congestion region of the driving-in road segment may include a plurality of regions that are discontinuous, and only a continuous congestion region may reflect the state of the intersection. Therefore, the congestion proportion coefficient may be determined according to a ratio of a length of the continuous congestion region to the length of the driving-in road segment. For example, a continuous congestion length of each driving-in road segment may be determined based on the traffic data of each sub road segment of the driving-in road segment. The continuous congestion length is the length of the continuous congestion region. Then, a ratio of the continuous congestion length to the length of the driving-in road segment is determined as the congestion proportion coefficient. Through this method, an accuracy of the determined congestion proportion coefficient may be improved, so that the congestion proportion coefficient may better reflect an influence of the signal period of the traffic signal indicator light at the intersection of the road segments on the states of the road segments.

According to an embodiment of the present disclosure, the continuous congestion region may be, for example, a congestion region close to the intersection, so that the congestion proportion coefficient may reflect the influence of the signal period of the traffic signal indicator light at the intersection formed by the road segments on the states of the road segments more accurately. In this case, a principle of determining the continuous congestion length may be referred to in the following description, which will not be repeated here.

According to an embodiment of the present disclosure, after the congestion proportion coefficient is obtained, the state of the driving-in road segment may be determined according to a magnitude relationship between the congestion proportion coefficient and a predetermined proportion threshold. For example, a first proportion threshold and a second proportion threshold may be set, and the first proportion threshold is greater than the second proportion threshold. If a value of the congestion proportion coefficient is greater than the first proportion threshold, it may be determined that the state of the driving-in road segment is the congestion state. If the value of the congestion proportion coefficient is less than or equal to the first proportion threshold and greater than the second proportion threshold, it may be determined that the state of the driving-in road segment is the super-saturation state. If the value of the congestion proportion coefficient is less than the second proportion threshold, it may be determined that the state of the driving-in road segment is the idle state. The first proportion threshold and the second proportion threshold may be set according to actual desires, for example, values of the first proportion threshold and the second proportion threshold may be 0.7 and 0.5, respectively, which is not limited in the present disclosure.

In an embodiment, the congestion parameter may include at least two parameters. Two thresholds are set for each of the at least two parameters, and the two thresholds are associated with each parameter. When determining the state of the driving-in road segment, it is necessary to comprehensively consider the at least two parameters. For example, if each parameter of the at least two parameters is greater than a first threshold associated with the each parameter, it may be determined that the state of the driving-in road segment is the congestion state. If each parameter of the at least two parameters is less than the first threshold associated with the each parameter and greater than or equal to a second threshold associated with the each parameter, it may be determined that the state of the driving-in road segment is the super-saturation state. If any of the at least two parameters is less than the second threshold (also referred to as a second congestion proportion threshold) associated with the parameter, it may be determined that the state of the driving-in road segment is the idle state.

For example, as shown in FIG. 4, the at least two parameters in this embodiment 400 include a congestion proportion coefficient 433 and a weighted congestion index 453. The congestion proportion coefficient is a ratio of a continuous congestion length 431 determined based on traffic data 410 of the sub road segment to the length 432 of the driving-in road segment. The weighted congestion index 453 is determined based on a congestion weight 451 determined based on attribute data 420 of the sub road segment and a congestion index 452 of the sub road segment. A proportion threshold 434 is set for the congestion proportion coefficient 433, and the proportion threshold 434 may include the above-mentioned first proportion threshold and second proportion threshold. A congestion index threshold 454 is set for the weighted congestion index 453, and the congestion index threshold 454 may include the above-mentioned first congestion index threshold and second congestion index threshold. By comparing magnitudes of the congestion proportion coefficient 433 and the first proportion threshold, and magnitudes of the congestion proportion coefficient 433 and the second proportion threshold, and by comparing magnitudes of the weighted congestion index 453 and the first congestion index threshold, and magnitudes of the weighted congestion index 453 and the second congestion index threshold, the state of the driving-in road segment may be determined.

For example, as shown in FIG. 4, a first congestion feature 440 of the driving-in road segment may be determined by comparing the magnitudes of the congestion proportion coefficient 433 and the first proportion threshold, and the magnitudes of the congestion proportion coefficient 433 and the second proportion threshold. The first congestion feature 440 may include a congestion feature, an idle feature, and a super-saturation feature, and a method of determining the first congestion feature 440 is similar to the above-mentioned method of determining the state of the driving-in road segment by considering only the congestion proportion coefficient 433. While, a second congestion feature 460 of the driving-in road segment is determined by comparing the magnitudes of the weighted congestion index 453 and the first congestion index threshold, and the magnitudes of the weighted congestion index 453 and the second congestion index threshold. The second congestion feature 460 may include the congestion feature, the idle feature, and the super-saturation feature, and a method of determining the second congestion feature 460 is similar to the above-mentioned method of determining the state of the driving-in road segment by considering only the weighted congestion index 453.

After the first congestion feature 440 and the second congestion feature 460 are obtained, a state 470 of the driving-in road segment is determined based on the two congestion features. For example, if the two congestion features are both the congestion features, the state 470 of the driving-in road segment is the congestion state. If the two congestion features are both super-saturation features, the state 470 of the driving-in road segment is the super-saturation state. If one of the two congestion features is the idle feature, the state 470 of the driving-in road segment is the idle state.

According to an embodiment of the present disclosure, after the state of each of the at least two driving-in road segments converging to form the intersection is obtained, the states of the at least two driving-in road segments may be statistically analyzed, and the state of the intersection may be determined according to a statistical result. For example, if the at least two driving-in road segments are not in the idle state, and the at least two driving-in road segments include a road segment in the super-saturation state, it may be determined that the state of the intersection includes the super-saturation state. If each of the at least two driving-in road segments is in the congestion state, it may be determined that the state of the intersection includes the congestion state. If the at least two driving-in road segments include a first road segment in the idle state and a second road segment in the congestion state or the super-saturation state, it may be determined that the state of the intersection includes the imbalance state. If the at least two driving-in road segments include a driving-in road segment in the idle state, it may be determined that the state of the intersection includes the idle state. It can be understood that the intersection may be in two or more states at the same time, for example, the intersection may be in the idle state and the imbalance state at the same time. It can be understood that the above-mentioned method of determining a state of an intersection is only used as an example for facilitating the understanding of the present disclosure, which is not limited in the present disclosure.

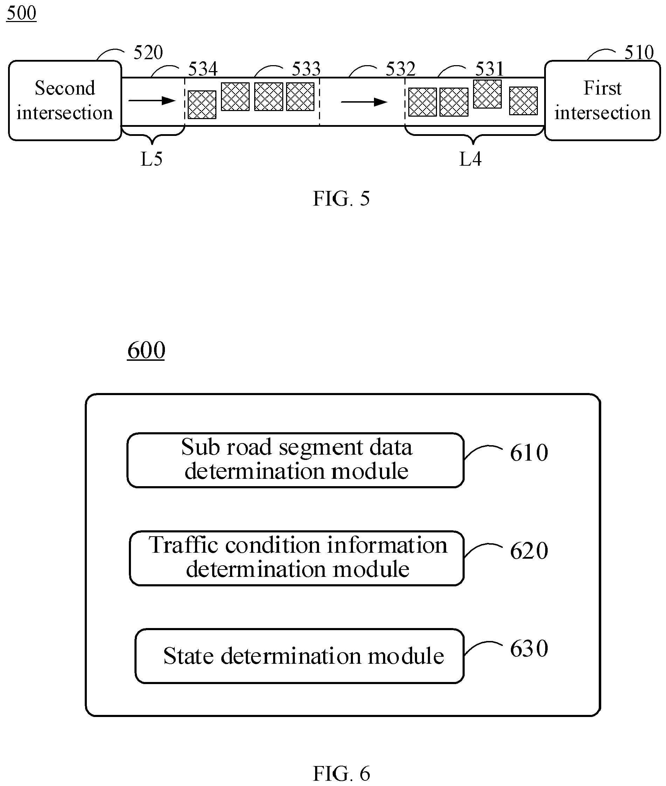

FIG. 5 is a schematic diagram of a principle of determining a continuous congestion length and a non-congestion length according to an embodiment of the present disclosure.

According to an embodiment of the present disclosure, when determining the continuous congestion length, for example, congestion regions in each driving-in road segment may be determined. After the congestion regions are determined, a distance between an end position of a first region and the intersection is determined as the continuous congestion length, where the first region is one of the congestion regions closest to the intersection. The congestion regions may be determined according to the traffic information of each sub road segment of the driving-in road segment, and specifically, may be determined according to, for example, a distance between vehicles driving on each sub road segment, a speed of a vehicle driving on each sub road segment, a driving duration consumed by a vehicle to pass through each sub road segment. If the speed of the vehicle driving on the sub road segment is less than a predetermined speed, it may be determined that the region of the sub road segment is a congestion region. It may be understood that the determination of the congestion region is similar to that in the related art, which is not limited in the present disclosure.

In an example, as shown in FIG. 5, in an embodiment 500, for a first intersection 510, the driving-in road segment includes a road segment having a driving direction from a second intersection 520 to the first intersection 510. The road segment includes sub road segments 531 to 534. The determined congestion regions include a region where the sub road segment 531 is located and a region where the sub road segment 533 is located. Then, it may be determined that the sub road segment 531 has the congestion region closest to the first intersection 510, and the continuous congestion length is a distance L4 between an end position of the sub road segment 531 and the first intersection 510, that is, a length of the sub road segment 531.

According to an embodiment of the present disclosure, the above-mentioned traffic condition information may further include, for example, a non-congestion length, so as to determine whether an overflow situation exists at the intersection or not according to the non-congestion length. The non-congestion length may be a distance between an end position of a second region and an upstream intersection of the intersection, where the second region is one of the determined congestion regions farthest away from the intersection.

For example, for the driving-in road segment including the sub road segments 531 to 534, the upstream intersection of the first intersection 510 is the second intersection 520. For the congestion regions determined above, the congestion region farthest from the first intersection is the region where the sub road segment 533 is located. The non-congestion length is a distance L5 between an end position of the sub road segment 533 and the second intersection 520, that is, a length of the sub road segment 534.

It may be understood that in a sub road segment, some regions may be congestion regions and some regions may be non-congestion regions. In this case, it is determined that a position of a tail of a last vehicle at a speed less than a predetermined speed on the sub road segment is the end position of the congestion region. Here, the last vehicle is a vehicle, on the sub road segment, with the farthest distance from the first intersection 510. The above-mentioned method of determining the end position of the congestion region is only used as an example to facilitate the understanding of the present disclosure, and this method specifically corresponds to the method of determining the congestion region.

According to an embodiment of the present disclosure, after the state of the driving-in road segment and the non-congestion length are determined, it is further possible to determine whether the overflow situation exists at the intersection or not, thereby further improving the accuracy of the determined state of the intersection. Specifically, it may be determined whether a target road segment with a non-congestion length of zero and in the congestion state is included in at least two driving-in road segments converging to form the intersection or not. If so, it is determined that the overflow situation exists at the intersection, and the state of the intersection includes the overflow state. It can be understood that the state of the intersection may include both the overflow state and the congestion state at the same time, or the overflow state and the imbalance state at the same time, etc.

According to an embodiment of the present disclosure, the above-mentioned traffic condition information of the driving-in road segment may be determined, for example, periodically according to a time window, so as to obtain the state of the intersection at different time instants. Here, the time window may be, for example, 2 min, 5 min, etc., which is not limited in the present disclosure.

According to an embodiment of the present disclosure, each of the above-mentioned thresholds may be obtained, for example, by a statistical method. For example, the K-means clustering method may be used to determine a set value of each threshold, which is not limited in the present disclosure.

Based on the method of determining a state of an intersection provided by the present disclosure, an apparatus of determining a state of an intersection is further provided by the present disclosure. The apparatus will be described in detail below with reference to FIG. 6.

FIG. 6 shows a structural block diagram of an apparatus of determining a state of an intersection according to an embodiment of the present disclosure.

As shown in FIG. 6, the apparatus 600 of determining a state of an intersection in this embodiment may include a sub road segment data determination module 610, a traffic condition information determination module 620, and a state determination module 630. The intersection is formed by a converge of a plurality of road segments including at least two driving-in road segments, and each driving-in road segment of the at least two driving-in road segments includes at least one sub road segment.

The sub road segment data determination module 610 is used to determine attribute data and traffic data of each sub road segment of each driving-in road segment. In an embodiment, the sub road segment data determination module 610 is used to perform the operation S210 described above, which will not be repeated here.

The traffic condition information determination module 620 is used to determine a traffic condition information of each driving-in road segment based on the attribute data and the traffic data. In an embodiment, the traffic condition information determination module 620 is used to perform the operation S220 described above, which will not be repeated here.

The state determination module 630 is used to determine the state of the intersection based on the traffic condition information of the at least two driving-in road segments. In an embodiment, the state determination module 630 is used to perform the operation S230 described above, which will not be repeated here.

According to an embodiment of the present disclosure, the traffic condition information determination module 620 is used to determine the state of each driving-in road segment. The traffic condition information determination module 620 may include a parameter determination sub-module and a state determination sub-module. The parameter determination sub-module is used to determine a congestion parameter of each driving-in road segment based on the attribute data and the traffic data. The state determination sub-module is used to determine the state of each driving-in road segment based on the congestion parameter and a predetermined threshold associated with the congestion parameter.

According to an embodiment of the present disclosure, the traffic data includes a congestion index. The above-mentioned parameter determination sub-module is used to determine a weighted congestion index. The parameter determination sub-module may include a weight determination unit and an index determination unit. The weight determination unit is used to determine a congestion weight of each sub road segment of the driving-in road segment with respect to the driving-in road segment based on the attribute data of the each sub road segment. The index determination unit is used to determine the weighted congestion index based on the congestion weight and the congestion index of each sub road segment.

According to an embodiment of the present disclosure, the attribute data includes a length and a position. The weight determination unit includes a first weight determination sub-unit and a second weight determination sub-unit. The first weight determination sub-unit is used to determine a first sub-weight of each sub road segment with respect to the driving-in road segment based on the length of the each sub road segment. The second weight determination sub-unit is used to determine a second sub-weight of each sub road segment with respect to the driving-in road segment based on the position of the each sub road segment.

According to an embodiment of the present disclosure, the index determination unit may include a first index determination sub-unit, a second index determination sub-unit, and a congestion index determination sub-unit. The first index determination sub-unit is used to determine a weighted sum of the congestion indexes of the sub road segments of the driving-in road segment based on the first sub-weights, so as to obtain a first weighted index. The second index determination sub-unit is used to determine a weighted sum of the congestion indexes of the sub road segments of the driving-in road segment based on the second sub-weights, so as to obtain a second weighted index. The congestion index determination sub-unit is used to determine the weighted congestion index based on the first weighted index and the second weighted index.

According to an embodiment of the present disclosure, the traffic condition information determination module 620 is further used to determine a congestion proportion coefficient of each driving-in road segment. The traffic condition information determination module 620 may further include a congestion length determination sub-module and a proportion coefficient determination sub-module. The congestion length determination sub-module is used to determine a continuous congestion length of each driving-in road segment based on the traffic data of each sub road segment of the driving-in road segment. The proportion coefficient determination sub-module is used to determine a ratio of the continuous congestion length to a length of the driving-in road segment as the congestion proportion coefficient.

According to an embodiment of the present disclosure, the congestion length determination sub-module may include a congestion region determination unit and a congestion length determination unit. The congestion region determination unit is used to determine congestion regions of the driving-in road segment based on a traffic information of each sub road segment of the driving-in road segment. The congestion length determination unit is used to determine a distance between an end position of the first region and the intersection as the continuous congestion length where, the first region is one of the congestion regions closest to the intersection.

According to an embodiment of the present disclosure, the congestion parameter includes at least two parameters. The state determination sub-module described above is used to determine a state of the driving-in road segment by: determining that the state of the driving-in road segment is a congestion state, in response to each parameter of the at least two parameters being greater than a first threshold value associated with the each parameter; determining that the state of the driving-in road segment is a super-saturation state, in response to each parameter of the at least two parameters being less than the first threshold value associated with the each parameter and being greater than or equal to a second threshold value associated with the each parameter; and determining that the state of the driving-in road segment is an idle state, in response to any of the at least two parameters being less than the second threshold associated with the parameter.

According to an embodiment of the present disclosure, the traffic condition information determination module 620 is further used to determine a non-congestion length of the driving-in road segment. The traffic condition information determination module 620 may further include a congestion region determination sub-module and a length determination sub-module. The congestion region determination sub-module is used to determine congestion regions in the driving-in road segment based on a traffic information of each sub road segment of the driving-in road segment. The length determination sub-module is used to determine a distance between an end position of a second region and an upstream intersection of the intersection as the non-congestion length, where the second region is one of the congestion regions farthest away from the intersection.

According to an embodiment of the present disclosure, the state determination module 630 is used to determine the state of the intersection by determining that the state of the intersection includes an overflow state, in response to the at least two driving-in road segments including a target road segment. Here, the target road segment has a non-congestion length of zero and is in the congestion state.

According to an embodiment of the present disclosure, the state determination module 630 is used to determine the state of the intersection by at least one of: determining that the state of the intersection includes a super-saturation state, in response to the at least two driving-in road segments being not in the idle state and the at least two driving-in road segments including a road segment in the super-saturation state; determining that the state of the intersection includes the congestion state, in response to each of the at least two driving-in road segments being in the congestion state; determining that the state of the intersection includes an imbalance state, in response to the at least two driving-in road segments including a first road segment in the idle state and a second road segment in the congestion state or the super-saturation state; or determining that the state of the intersection includes the idle state, in response to the at least two driving-in road segments including a driving-in road segment in the idle state.

According to an embodiment of the present disclosure, the sub road segment data determination module 610 may include an information acquisition sub-module and a traffic data determination sub-module. The information acquisition sub-module is used to acquire a vehicle position information uploaded by a navigation application and a road network information. The traffic data determination sub-module is used to determine the traffic data of each sub road segment of each driving-in road segment based on the road network information and the vehicle position information. Here, the road network information includes the attribute data of each sub road segment of each driving-in road segment.

In the technical solution of the present disclosure, the acquisition, storage, use, processing, transmission, provision, disclosure and application of the user's personal information involved are all in compliance with the provisions of relevant laws and regulations, and necessary confidentiality measures have been taken, and it does not violate public order and good morals. In the technical solution of the present disclosure, before obtaining or collecting the user's personal information, the user's authorization or consent is obtained.

According to an embodiment of the present disclosure, the present disclosure further provides an electronic device, a readable storage medium, and a computer program product.

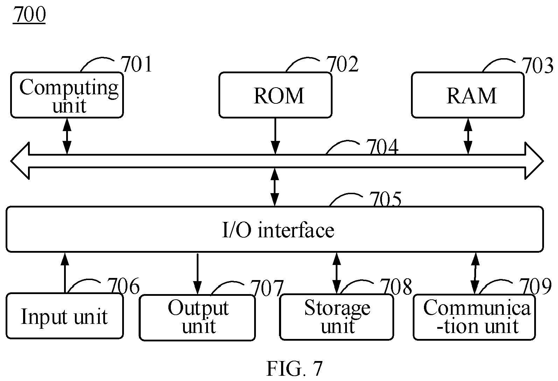

FIG. 7 shows a schematic block diagram of an exemplary electronic device 800 for implementing the method of determining the state of the intersection in the exemplary embodiments of the present disclosure. The electronic device is intended to represent various forms of digital computers, such as a laptop computer, a desktop computer, a workstation, a personal digital assistant, a server, a blade server, a mainframe computer, and other suitable computers. The electronic device may further represent various forms of mobile devices, such as a personal digital assistant, a cellular phone, a smart phone, a wearable device, and other similar computing devices. The components as illustrated herein, and connections, relationships, and functions thereof are merely examples, and are not intended to limit the implementation of the present disclosure described and/or required herein.

As shown in FIG. 7, the device 700 includes a computing unit 701 which may perform various appropriate actions and processes according to a computer program stored in a read only memory (ROM) 702 or a computer program loaded from a storage unit 808 into a random access memory (RAM) 703. In the RAM 703, various programs and data necessary for an operation of the device 700 may also be stored. The computing unit 701, the ROM 702, and the RAM 703 are connected to each other through a bus 704. An input/output (I/O) interface 705 is also connected to the bus 704.

A plurality of components in the device 700 are connected to the I/O interface 705, including: an input unit 706, such as a keyboard, or a mouse; an output unit 707, such as displays or speakers of various types; a storage unit 708, such as a disk, or an optical disc; and a communication unit 709, such as a network card, a modem, or a wireless communication transceiver. The communication unit 709 allows the device 700 to exchange information/data with other devices through a computer network such as Internet and/or various telecommunication networks.

The computing unit 701 may be various general-purpose and/or a dedicated processing assemblies having processing and computing capabilities. Some examples of the computing units 701 include, but are not limited to, a central processing unit (CPU), a graphics processing unit (GPU), various dedicated artificial intelligence (AI) computing chips, various computing units that run machine learning model algorithms, a digital signal processing processor (DSP), and any suitable processor, controller, microcontroller, etc. The computing unit 701 executes various methods and processing described above, such as the method of determining the state of the intersection. For example, in some embodiments, the method of determining the state of the intersection may be implemented as a computer software program which is tangibly embodied in a machine-readable medium, such as the storage unit 708. In some embodiments, the computer program may be partially or entirely loaded and/or installed in the device 700 via the ROM 702 and/or the communication unit 709. The computer program, when loaded in the RAM 703 and executed by the computing unit 701, may execute one or more steps in the method of determining the state of the intersection described above. Alternatively, in other embodiments, the computing unit 701 may be configured to execute the method of determining the state of the intersection by any other suitable means (e.g., by means of firmware).

Various embodiments of the systems and technologies described herein may be implemented in a digital electronic circuit system, an integrated circuit system, a field programmable gate array (FPGA), an application specific integrated circuit (ASIC), an application specific standard product (ASSP), a system on chip (SOC), a load programmable logic device (CPLD), a computer hardware, firmware, software, and/or combinations thereof. These various embodiments may be implemented by one or more computer programs executable and/or interpretable on a programmable system including at least one programmable processor. The programmable processor may be a dedicated or general-purpose programmable processor, which may receive data and instructions from a storage system, at least one input device and at least one output device, and may transmit the data and instructions to the storage system, the at least one input device, and the at least one output device.

Program codes for implementing the methods of the present disclosure may be written in one programming language or any combination of more programming languages. These program codes may be provided to a processor or controller of a general-purpose computer, a dedicated computer or other programmable data processing apparatus, such that the program codes, when executed by the processor or controller, cause the functions/operations specified in the flowcharts and/or block diagrams to be implemented. The program codes may be executed entirely on a machine, partially on a machine, partially on a machine and partially on a remote machine as a stand-alone software package or entirely on a remote machine or server.

In the context of the present disclosure, a machine-readable medium may be a tangible medium that may contain or store a program for use by or in connection with an instruction execution system, an apparatus or a device. The machine-readable medium may be a machine-readable signal medium or a machine-readable storage medium. The machine-readable medium may include, but is not limited to, an electronic, a magnetic, an optical, an electromagnetic, an infrared, or a semiconductor system, apparatus, or device, or any suitable combination of the above. More specific examples of the machine-readable storage medium may include an electrical connection based on one or more wires, a portable computer disk, a hard disk, a random access memory (RAM), a read only memory (ROM), an erasable programmable read only memory (EPROM or a flash memory), an optical fiber, a compact disk read only memory (CD-ROM), an optical storage device, a magnetic storage device, or any suitable combination of the above.

In order to provide interaction with the user, the systems and technologies described here may be implemented on a computer including a display device (for example, a CRT (cathode ray tube) or LCD (liquid crystal display) monitor) for displaying information to the user, and a keyboard and a pointing device (for example, a mouse or a trackball) through which the user may provide the input to the computer. Other types of devices may also be used to provide interaction with users. For example, a feedback provided to the user may be any form of sensory feedback (for example, visual feedback, auditory feedback, or tactile feedback), and the input from the user may be received in any form (including acoustic input, voice input or tactile input).

The systems and technologies described herein may be implemented in a computing system including back-end components (for example, a data server), or a computing system including middleware components (for example, an application server), or a computing system including front-end components (for example, a user computer having a graphical user interface or web browser through which the user may interact with the implementation of the system and technology described herein), or a computing system including any combination of such back-end components, middleware components or front-end components. The components of the system may be connected to each other by digital data communication (for example, a communication network) in any form or through any medium. Examples of the communication network include a local area network (LAN), a wide area network (WAN), and the Internet.

The computer system may include a client and a server. The client and the server are generally far away from each other and usually interact through a communication network. The relationship between the client and the server is generated through computer programs running on the corresponding computers and having a client-server relationship with each other. The server may be a cloud server, also known as a cloud computing server or virtual host, which is a host product in the cloud computing service system to solve the defects of difficult management and weak business scalability in the traditional physical host and VPS service ("Virtual Private Server", or "VPS"). The server may also be a server of distributed system or a server combined with block-chain.

It should be understood that steps of the processes illustrated above may be reordered, added or deleted in various manners. For example, the steps described in the present disclosure may be performed in parallel, sequentially, or in a different order, as long as a desired result of the technical solution of the present disclosure may be achieved. This is not limited in the present disclosure.

The above-mentioned specific embodiments do not constitute a limitation on the scope of protection of the present disclosure. Those skilled in the art should understand that various modifications, combinations, sub-combinations and substitutions may be made according to design requirements and other factors. Any modifications, equivalent replacements and improvements made within the spirit and principles of the present disclosure shall be contained in the scope of protection of the present disclosure.

**Claims**

1. A method of determining a state of an intersection, wherein the intersection (140) is formed by a convergence of a plurality of road segments comprising at least two driving-in road segments (161, 163), and each driving-in road segment of the at least two driving-in road segments (161, 163) comprises at least one sub road segment, and the method comprises:

   determining (S210) attribute data and traffic data of each sub road segment of each driving-in road segment;
   determining (S220) a traffic condition information of each driving-in road segment based on the attribute data and the traffic data; and
   determining (S230) the state of the intersection based on the traffic condition information of the at least two driving-in road segments.

2. The method of claim 1, wherein the determining a traffic condition information of each driving-in road segment comprises determining a state of each driving-in road segment by:

   determining a congestion parameter of each driving-in road segment based on the attribute data and the traffic data; and
   determining the state of each driving-in road segment based on the congestion parameter and a predetermined threshold associated with the congestion parameter.

3. The method of claim 2, wherein the traffic data comprises a congestion index, and the determining a congestion parameter of each driving-in road segment comprises determining a weighted congestion index by:

determining a congestion weight of each sub road segment of the driving-in road segment with respect to the driving-in road segment, based on the attribute data of the each sub road segment; and
determining the weighted congestion index based on the congestion weight and the congestion index of each sub road segment.

4. The method of claim 3, wherein the attribute data comprises a length and a position, and the determining a congestion weight of each sub road segment with respect to the driving-in road segment comprises:

determining a first sub-weight of each sub road segment with respect to the driving-in road segment based on the length of the each sub road segment; and
determining a second sub-weight of each sub road segment with respect to the driving-in road segment based on the position of the each sub road segment.

5. The method of claim 4, wherein the determining the weighted congestion index based on the congestion weight and the congestion index of each sub road segment comprises:

determining a weighted sum of the congestion indexes of the sub road segments of the driving-in road segment based on the first sub-weights, so as to obtain a first weighted index;
determining a weighted sum of the congestion indexes of the sub road segments of the driving-in road segment based on the second sub-weights, so as to obtain a second weighted index; and
determining the weighted congestion index based on the first weighted index and the second weighted index.

6. The method of any one of claims 2 to 5, wherein the determining a congestion parameter of each driving-in road segment comprises determining a congestion proportion coefficient by:

determining a continuous congestion length (L4) of the driving-in road segment based on the traffic data of each sub road segment of the driving-in road segment; and
determining a ratio of the continuous congestion length to a length of the driving-in road segment as the congestion proportion coefficient.

7. The method of claim 6, wherein the determining a continuous congestion length of the each driving-in road segment comprises:

determining congestion regions of the driving-in road segment based on a traffic information of each sub road segment of the driving-in road segment; and
determining a distance between an end position of a first region and the intersection as the continuous congestion length,
wherein the first region is one of the congestion regions closest to the intersection.

8. The method of claim 2, wherein the congestion parameter comprises at least two parameters, and the determining a state of each driving-in road segment comprises:

determining that the state of the driving-in road segment is a congestion state, in response to each parameter of the at least two parameters being greater than a first threshold associated with the each parameter;
determining that the state of the driving-in road segment is a super-saturation state, in response to each parameter of the at least two parameters being less than the first threshold associated with the each parameter and being greater than or equal to a second threshold associated with the each parameter; and
determining that the state of the driving-in road segment is an idle state, in response to any of the at least two parameters being less than the second threshold associated with the parameter.

9. The method of any one of claims 2 to 8, wherein the determining a traffic condition information of each driving-in road segment further comprises determining a non-congestion length (L5) by:

determining congestion regions of the driving-in road segment based on a traffic information of each sub road segment of the driving-in road segment; and

determining a distance between an end position of a second region and an upstream intersection of the intersection as the non-congestion length,
wherein the second region is one of the congestion regions farthest away from the intersection, and
wherein the determining the state of the intersection comprises:

determining that the state of the intersection comprises an overflow state, in response to the at least two driving-in road segments comprising a target road segment,
wherein the target road segment has a non-congestion length of zero and is in a congestion state.

10. The method of claim 8, wherein the determining the state of the intersection comprises at least one of:

determining that the state of the intersection comprises the super-saturation state, in response to the at least two driving-in road segments being not in the idle state and the at least two driving-in road segments comprising a road segment in the super-saturation state;
determining that the state of the intersection comprises the congestion state, in response to each of the at least two driving-in road segments being in the congestion state;
determining that the state of the intersection comprises an imbalance state, in response to the at least two driving-in road segments comprising a first road segment in the idle state and a second road segment in the congestion state or the super-saturation state; or
determining that the state of the intersection comprises the idle state, in response to the at least two driving-in road segments comprising a driving-in road segment in the idle state.

11. The method according to claim 1, wherein the determining traffic data of each sub road segment of each driving-in road segment comprises:

acquiring a vehicle position information uploaded by a navigation application and a road network information; and
determining the traffic data of each sub road segment of each driving-in road segment based on the road network information and the vehicle position information,
wherein the road network information comprises the attribute data of each sub road segment of each driving-in road segment.

12. An apparatus (600) of determining a state of an intersection, wherein the intersection is formed by a convergence of a plurality of road segments comprising at least two driving-in road segments, and each driving-in road segment of the at least two driving-in road segments comprises at least one sub road segment, and the apparatus comprises:

a sub road segment data determination module (610), configured to determine attribute data and traffic data of each sub road segment of each driving-in road segment;
a traffic condition information determination module (620), configured to determine a traffic condition information of each driving-in road segment based on the attribute data and the traffic data; and
a state determination module (630), configured to determine the state of the intersection based on the traffic condition information of the at least two driving-in road segments.

13. The apparatus of claim 12, wherein the traffic condition information determination module (620) is configured to determine a state of each driving-in road segment, and the traffic condition information determination module (620) comprises:

a parameter determination sub-module, configured to determine a congestion parameter of each driving-in road segment based on the attribute data and the traffic data; and
a state determination sub-module, configured to determine the state of each driving-in road segment based on the congestion parameter and a predetermined threshold associated with the congestion parameter.

14. A non-transitory computer-readable storage medium having computer instructions stored thereon, wherein the computer instructions are configured to cause a computer to implement the method of any one of claims 1 to 11.

15. A computer program product comprising a computer program, wherein the computer program, when executed by a processor, causes the processor to implement the method of any one of claims 1 to 11.

100

110    120    130    150    163    162    161    140

FIG. 1

200

| Attribute data and traffic data of each sub road segment of each driving-in road segment are determined. | S210 |

↓

| A traffic condition information of each driving-in road segment is determined based on the attribute data and the traffic data. | S220 |

↓

| A state of the intersection is determined based on the traffic condition information of the at least two driving-in road segments. | S230 |

FIG. 2

300

FIG. 3

EP 4 064 239 A2

400

FIG. 4

500

520

534    533    532    531    510

| Second intersection | | | First intersection |

L5    L4

FIG. 5

600

Sub road segment data determination module    610

Traffic condition information determination module    620

State determination module    630

FIG. 6

FIG. 7